(19) Europäisches Patentamt
European Patent Office
Office européen des brevets

(11) EP 2 759 201 B1

(12) **EUROPEAN PATENT SPECIFICATION**

(45) Date of publication and mention of the grant of the patent:
**23.08.2017 Bulletin 2017/34**

(21) Application number: **13772894.5**

(22) Date of filing: **02.04.2013**

(51) Int Cl.:
***A01N 43/90*** *(2006.01)* ***A01G 7/06*** *(2006.01)*
***A01N 65/00*** *(2009.01)* ***A01N 65/08*** *(2009.01)*
***A01P 21/00*** *(2006.01)*

(86) International application number:
**PCT/JP2013/060071**

(87) International publication number:
**WO 2013/151041 (10.10.2013 Gazette 2013/41)**

(54) **COMPOSITION FOR IMPROVING RESISTANCE TO ENVIRONMENTAL STRESS OF PLANT AND METHOD FOR IMPROVING RESISTANCE TO ENVIRONMENTAL STRESS OF PLANT**

ZUSAMMENSETZUNG ZUR VERBESSERUNG DER RESISTENZ VON PFLANZEN GEGEN UMWELTSTRESS SOWIE VERFAHREN ZUR ERHÖHUNG DER RESISTENZ VON PFLANZEN GEGEN UMWELTSTRESS

COMPOSITION POUR L'AMÉLIORATION DE LA RÉSISTANCE AU STRESS ENVIRONNEMENTAL D'UNE PLANTE ET PROCÉDÉ POUR L'AMÉLIORATION DE LA RÉSISTANCE AU STRESS ENVIRONNEMENTAL D'UNE PLANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2012 JP 2012084596**

(43) Date of publication of application:
**30.07.2014 Bulletin 2014/31**

(73) Proprietor: **The Shizuoka Chamber of Commerce and Industry**
**Shizuoka 420-0851 (JP)**

(72) Inventors:
- **HARA, Masakazu**
**Shizuoka-shi**
**Shizuoka 422-8529 (JP)**
- **NAKANISHI, Motoyasu**
**Fuji-shi**
**Shizuoka 421-3304 (JP)**

(74) Representative: **TBK**
**Bavariaring 4-6**
**80336 München (DE)**

(56) References cited:
**WO-A1-2004/066730** **WO-A1-2006/059782**
**CN-A- 101 352 180** **JP-A- H11 199 419**
**JP-A- 2008 037 775** **JP-A- 2008 037 775**
**JP-A- 2009 046 411** **JP-A- 2011 521 982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 759 201 B1

## Description

TECHNICAL FIELD

The present invention relates to the use of a composition for improving the environmental stress resistance of a plant, and a method for improving the environmental stress resistance of a plant.

BACKGROUND ART

In recent years, according to the progress of global warming, environment changes such as increase of temperature and increase of drying have appeared, and the changes are affecting even to the extent of the growth of edible plants such as grain. In order to handle this situation, a method of adjusting a growing environment of plant, for example, protected horticulture, and a plant factory, and a method of improving the environmental stress resistance of a plant itself, can be considered. In the former method, not only it is necessary to construct and maintain the facilities, but also in the case where a plant is actuality cultivated in a business scale, considerable energy is continuously consumed, and thus in consideration of the cost, this method cannot be easily employed.

In the latter method, (1) cross breeding, (2) recombination of environmental stress resistance genes, and (3) use of biological materials, can be considered. In a method of (1), it takes many years to establish the bleed varieties, and thus it cannot handle the situation that is required to be attended in these days. In a method of (2), facilities are required in order to grow the genetically modified plant, and the same problem as in the former method described above remains. On the other hand, in a method of (3), as described in Patent Literatures 1 and 2, special facilities are not required, and the environmental stress resistance can be improved only by giving biological materials such as yeast degradation products, and herbal medicine crude extracts, to a plant when needed, therefore, this method is considered to be the most practical.

On the other hand, plant alkaloids among the natural materials can be relatively easily separated, and further are confirmed that not only the insect-repellent effects but also the pharmacological effects on the human body are possessed. The specific production methods and utilization methods have already been proposed, as shown in Patent Literatures 3 to 9.

CITATION LIST

PATENT LITERATURE

Patent Literature 1: Japanese Unexamined Patent Publication No. 11-199419A
Patent Literature 2: Japanese Unexamined Patent Publication No. 2007-45709A
Patent Literature 3: U.S. Patent No. 5,133,981
Patent Literature 4: Japanese Unexamined Patent Publication of PCT Application No. 2008-524130
Patent Literature 5: Japanese Unexamined Patent Publication of PCT Application No. 2011-521982
Patent Literature 6: Japanese Unexamined Patent Publication of PCT Application No. 2011-512370
Patent Literature 7: Japanese Unexamined Patent Publication No. 05-124944A
Patent Literature 8: Japanese Unexamined Patent Publication No. 2008-37775A
Patent Literature 9: Japanese Unexamined Patent Publication No. 2009-46411A


NON PATENT LITERATURE

Non Patent Literature 1: pp.145-155, Safety assessment of sanguiritrin, alkaloid fraction of Macleaya cordata, in rats, Psotova et al., Veterinarni Medicina, 51,2006(4)

SUMMARY OF THE INVENTION PROBLEMS TO BE SOLVED BY THE INVENTION

However, as to the biological materials such as yeast degradation products, and herbal medicine crude extracts, which are described in Patent Literatures 1 and 2, the active ingredients are unknown, therefore, there has been a problem in the safety in applying the biological materials to an edible plant. Further, the biological materials are obtained from biological raw materials, and thus variation of the effects has been sometimes observed.

On the other hand, in Patent Literatures 3 to 9, as described above, there is a disclosure that plant alkaloids are used for various applications. However, it has not been reported that the plant alkaloids are used for improving the

environmental stress resistance of a plant.

WO 2004/066730 A1 and WO 2006/059782 A1 are directed at compositions which may reduce stress tolerance or improve plant tolerance against environmental stress.

JP 2011 521982 A is directed at a use of composition based on benzophenanthridine alkaloids, an extract of *Hippophae rhamnoides* and a lipophilic extract of *Echinacea angustifolia* having anti-bacterial, anti-viral and anti-inflammatory activity in the treatment of bacterial and viral infections of the upper respiratory tract and in the treatment of influenza in human beings. A specific benzophenanthridine alkaloid may be sanguinarine.

JP 2008 037775 A is directed at the use of alkaloids as repellents against agricultural insect pests.

CN 101 352 180 A is directed at an alkaloid extracted from *Macleaya cordata* which comprises sanguinarine as one of its four main monomer alkaloids, and the use of respective compositions for inhibiting plant pathogens and for controlling plant diseases is described.

Therefore, an object of the present invention is to provide the use of a composition for improving the environmental stress resistance of a plant, the active ingredients of which have been clarified, and thus, which can be applied to a plant that has been required to be safe, such as an edible plant, and further can provide a stable effect.

In addition, another object of the present invention is to provide the use of a composition for improving the environmental stress resistance of a plant, containing plant alkaloids as an active ingredient.

Further, another object of the present invention is to provide a method for improving the environmental stress resistance of a plant by using the composition described above.

MEANS FOR SOLVING THE PROBLEMS

In order to solve the above problems, the composition used for improving the environmental stress resistance, as defined in claim 1, of a plant, of the present invention contains at least one kind of sanguinarine or a salt thereof represented by the following formula (I), as an active ingredient.

[Chemical formula 1]

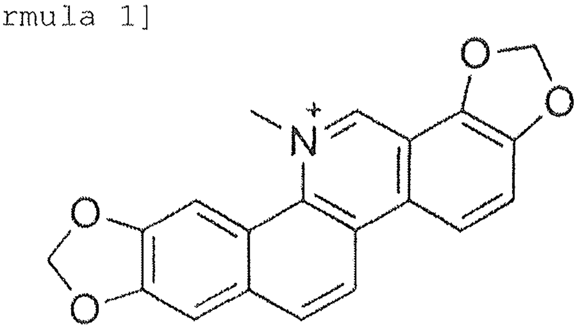

(I)

A composition used for improving the environmental stress resistance, as defined in claim 1, of a plant of the present invention contains as an active ingredient at least one kind of sanguinarine or a salt thereof that is represented by the above formula which is one kind of plant alkaloids. With the application of the composition of the present invention to a plant, the environmental stress resistance of a plant is enhanced, and thus the plant can be grown in a harsh environment such as drought, and intense heat. Sanguinarine or a salt thereof, which is an active ingredient, has a reliable effect with the low concentration such as several ppm to several tens of ppm and the small amount of application, therefore, a stable effect of improving the environmental stress resistance can be provided to a plant. In addition, as to the sanguinarine, as reported in Non Patent Literature 1, disorders of particular note were not observed in each of the items related to physiological disorders, as a result of an administration test of the sanguinarine to rats, and thus the sanguinarine has a high safety. Therefore, sanguinarine has a high safety, and can be applied even to a plant that has been required to be safe, such as an edible plant. Further, in the sanguinarine or a salt thereof in the present invention, a sanguinarine derivative or a salt thereof is also included.

The environmental stress is high temperature stress, dry stress, or high temperature stress and dry stress.

Further, the active ingredient of a composition for improving the environmental stress resistance of a plant of the present invention is preferably a substance derived from a plant containing at least one kind of sanguinarine or a salt thereof. According to this, by the sanguinarine contained in a substance derived from a plant, or a salt thereof, the environmental stress resistance can be provided to a plant that should be protected. In addition, an active ingredient of the composition of the present invention can be obtained from a natural product, and thus the composition of the present invention can be obtained without relying on a chemical means such as chemical synthesis.

Further, the substance derived from a plant is preferably a substance derived from Macleaya cordata. According to this, a plant material that is suitable as a substance derived from a plant is selected. By the sanguinarine contained

in the substance or a salt thereof derived from Macleaya cordata, the environmental stress resistance can be imparted to a plant that should be protected.

Further, it is preferable that the substance derived from Macleaya cordata is a substance derived from a seed of Macleaya cordata. According to this, among the plant organs of Macleaya cordata, a suitable organ containing the active ingredient in a large amount is selected.

Further, it is also preferable that the substance derived from a plant is an extract obtained by performing at least one extraction treatment selected from the group consisting of a solvent extraction treatment, a subcritical water extraction treatment, and a heat extraction treatment, to a plant containing at least one kind of sanguinarine or a salt thereof. According to this, an active ingredient of the composition of the present invention can be efficiently obtained by a simple treatment such as a solvent extraction treatment, a subcritical water extraction treatment, and a heat extraction treatment.

In addition, the method for improving the environmental stress resistance of a plant according to the present invention is provided with a step of applying the composition for improving the environmental stress resistance of a plant described above to the plant body or soil before the plant is subjected to the environmental stress. Before the plant is subjected to environmental stress, by applying the composition of the present invention to a plant that should be protected, environmental stress resistance is imparted to the plant in advance, as a result, the recovery function of the plant exposed to environmental stress is accelerated, and thus further growth can be facilitated.

EFFECT OF THE INVENTION

According to the present invention, a composition for improving the environmental stress resistance of a plant, which has the following advantageous effects, can be provided.

(1) The active ingredient is at least one kind of sanguinarine or a salt thereof, therefore, the safety is high, and the effects are exerted at a low concentration.
(2) The environmental stress resistance of a plant, i.e. high temperature and drying can be stably improved.
(3) The active ingredient can be obtained as a substance derived from a plant from a plant containing at least one kind of sanguinarine or a salt thereof, and thus the composition of the present invention can be obtained at a low cost without relying on a chemical means such as chemical synthesis.

BRIEF DESCRIPTION OF DRAWINGS

Fig. 1 is a graph showing the fresh weight of Arabidopsis thaliana on the 10th day after the high temperature exposure treatment at 55°C in Example 3 of the present invention;
Fig. 2 is a picture showing the state of growth of Arabidopsis thaliana on the 10th day after the high temperature exposure treatment at 55°C in Example 3 of the present invention;
Fig. 3 is a picture showing the state of growth of Arabidopsis thaliana on the 4th day after the high temperature exposure treatments at 35°C for one hour and 45°C for two hours in Example 4 of the present invention;
Fig. 4 is a graph showing the average degree (%) of damage of Arabidopsis thaliana in Example 4 of the present invention;
Fig. 5 is a picture showing the state of growth of tomato seedlings after the high temperature exposure treatment at 40°C for one week in Example 5 of the present invention;
Fig. 6 is a graph showing the fresh weight of Komatsuna (Japanese mustard spinach) after the dry exposure treatment for 14 days in Example 6 of the present invention;
Fig. 7 is a graph showing the changes in saturated moisture content (%) of the soil during the tests in Example 7 of the present invention;
Fig. 8 is a picture showing the state of growth of alfalfa after the dry exposure treatment before the re-watering in Example 7 of the present invention;
Fig. 9 is pictures showing the state of growth of alfalfa on the 7th day after the dry exposure treatment in Example 7 of the present invention, and includes (a) a picture of plastic pots viewed from the upper side, (b) a picture of plastic pots viewed from the front side, and (c) a picture showing harvested alfalfa;
Fig. 10 is a graph showing the fresh weight of alfalfa on the 7th day after the dry exposure treatment in Example 7 of the present invention;
Fig. 11 is pictures showing the state of growth of qing-geng-cai (Chinese cabbage) on the 7th day after the dry exposure treatment in Example 8 of the present invention, and includes (a) a picture of plastic pots viewed from the obliquely upper side, and (b) a picture of plastic pots viewed from the upper side; and

Fig. 12 is a graph showing the fresh weight of qing-geng-cai on the 7th day after the dry exposure treatment in Example 8 of the present invention.

DESCRIPTION OF EMBODIMENTS

The composition for improving the environmental stress resistance of a plant used in the present invention contains as an active ingredient at least one kind of sanguinarine or a salt thereof represented by the following formula (I).

[Chemical formula 2]

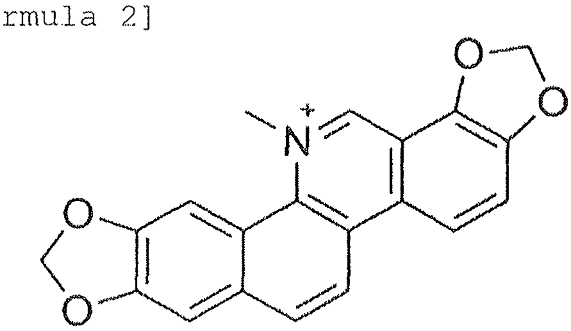

(I)

Sanguinarine is a plant alkaloid having a benzophenanthridine skeleton that is mainly contained in a plant of Papaveraceae in nature. Further, in the sanguinarine or a salt thereof in the present invention, a sanguinarine derivative or a salt thereof having substantially the same function or effect as that of the sanguinarine is also included. In the present specification, hereinafter in a substance described as "sanguinarine", sanguinarine or a salt thereof is certainly included, and further a sanguinarine derivative or a salt thereof is also included.

The sanguinarine contained in the composition used in the present invention may be any one of a substance derived from a natural material such as a natural extract, a chemical compound, and a substance derived from a microorganism by a microbial fermentation method, however, from the viewpoint that the composition of the present invention can be obtained without relying on a chemical means such as chemical synthesis, a substance derived from a natural material is preferable, and a substance derived from a plant is more preferable. In addition, a sanguinarine salt is not particularly limited, examples of the sanguinarine salt include an inorganic acid salt such as a carbonate, a hydrochloride, a nitrate, a sulfate, or a phosphate; and an organic salt such as an acetate, a propionate, a butyrate, or a fatty acid salt.

Sanguinarine is contained in a plant body of Macleaya cordata, Eschscholzia californica, chelidoniummajus, Sangurinaria canadensis, and the like, which are one kind of a plant of Papaveraceae. Therefore, sanguinarine can be obtained from a plant containing such sanguinarine or a salt thereof by the extraction of sanguinarine that is an active ingredient of the composition of the present invention, or the like.

Particularly, Macleaya cordata is a perennial herb of Papaveraceae, and is commonly observed in sunny grassland, a vacant lot, and the like, and it is considered that the Macleaya cordata growing such a place contains a large amount of sanguinarine. Therefore, in the case where sanguinarine is obtained from a natural product, that is, from a plant, it is preferable to obtain the sanguinarine from Macleaya cordata. In addition, Macleaya cordata contains the sanguinarine in any plant organ of a seed, a leaf, a stem, a fruit, and a root, and the content in a seed is overwhelmingly larger than that of other plant organs. Therefore, from the viewpoint of high efficiency, it is preferable to obtain the sanguinarine from a seed of Macleaya cordata. Further, the seeds of Macleaya cordata are in a fruit with a pod, therefore, it is preferable that a fruit with a pod is harvested first, and then seeds taken out from the fruit with a pod are used, or also that the whole fruit is used. In addition, when grown in a non-interference way in a natural environment, the Macleaya cordata is expected to bloom and obtain the fruit with a pod twice a year (in early summer and late autumn), therefore, if the Macleaya cordata is grown in this technique, a fruit with a pod can be efficiently harvested.

In the case where the sanguinarine is obtained from a plant including Macleaya cordata, the substance derived from a plant may contain other ingredients that are contained in the plant. As an example, in the substance derived from Macleaya cordata, in addition to the sanguinarine, alkaloids contained in Macleaya cordata, such as chelerythrine, chelirubine, and protopine may be contained. Among them, chelerythrine is an alkaloid having a benzophenanthridine skeleton similar to the sanguinarine that is an active ingredient of the composition of the present invention, and has a structure that is almost common with that of the sanguinarine. Further, it has been known that both of the sanguinarine and the chelerythrine have a protein kinase C (PKC) antagonist activity, an antibacterial activity, and an antifungal property, and the sanguinarine and the chelerythrine have the functions and actions in common with each other. Therefore, the chelerythrine can be used as a sanguinarine derivative, and thus also as an active ingredient of the composition of the present invention.

Hereinafter, a method for obtaining the sanguinarine that is an active ingredient of the composition of the present invention, from a plant containing sanguinarine will be explained. In a substance derived from a plant, a plant body itself and a plant extract are included. For example, examples of the plant body itself include a plant body that is obtained by drying the plant containing sanguinarine and then crushing the dried plant, and further a plant body that is obtained by processing the dried and crushed plant into a powdery form, a granular form, a slurry form, or a paste form.

On the other hand, the plant extract according to the present invention can be obtained by performing an extraction treatment in which a plant material containing sanguinarine is immersed in or brought into contact with the extraction solvent. The extraction treatment can be performed either under normal pressure or under increased pressure. The plant extraction can be performed at an extraction temperature of in a range of 0°C to 150°C, and preferably normal temperature to 120°C, and in the extraction time of 1 minute to 24 hours, and preferably 1 minute to 3 hours. The solvent used for the extraction is not particularly limited, and examples of the solvent include water; an acid base such as an aqueous hydrochloric acid solution, an aqueous sulphuric acid solution, an aqueous acetic acid solution, and an aqueous sodium hydroxide solution; an alcohol such as methanol, ethanol, isopropanol, polyethylene glycol, glycerin, and sorbitol; a ketone such as acetone, and dimethyl ketone; ethyl acetate; toluene; diethyl ether; methylene chloride; dimethyl sulfoxide; chloroform; hexane; and a mixture thereof. Among them, in view of the ease of handling, and the safety at the time of preparing the composition, water, dilute hydrochloric acid, acetic acid, alcohols, or a mixture thereof is suitable. The extraction process is not particularly limited, and specifically, a solvent extraction treatment, a subcritical water extraction treatment, a heat extraction treatment, a pressure extraction treatment, a pressurized hot water extraction treatment, an extraction treatment by a Soxhlet extractor, a supercritical extraction treatment, an ultrasonic extraction treatment, an extraction treatment by enzymatic degradation, and the like may be applied.

The solvent extraction treatment means an extraction treatment in which the extraction is performed by immersing a plant material in an appropriate solvent described above, and leaving the plant material in the solvent for a certain period of time. As to the processing temperature, a room temperature or a temperature heated to the extent of less than the boiling point of the solvent can be used for performing the process. Further, the extraction can also be facilitated by stirring the solvent, or by pressurizing the plant material, during the immersion. The solvent extract according to an embodiment of the present invention can be obtained by immersing an object to be extracted such as seeds, leaves, and stems of Macleaya cordata and the like in dilute hydrochloric acid that has been heated to 50°C to 70°C, for 10 minutes to 24 hours, preferably 30 minutes to 6 hours, and more preferably 1 hour to 3 hours.

The heat extraction treatment means an extraction treatment in which the extraction is performed by using a water-containing solvent at 50°C or more. The heat extract according to an embodiment of the present invention can be obtained by bringing an object to be extracted such as seeds, leaves, and stems of Macleaya cordata and the like into contact with or by immersing the object in a water-containing solvent having a temperature of 50°C or more, and then by heating the object for 3 minutes to 24 hours, preferably 3 minutes to 3 hours, and more preferably 5 minutes to 60 minutes, or by performing a boiling treatment to the object.

The subcritical water extraction treatment means an extraction treatment in which the extraction is performed by using a solvent that is in a subcritical state under the conditions of the temperature and pressure lower than the critical point (critical point of water is 22 MPa, and 374°C) . The subcritical water extract according to an embodiment of the present invention can be obtained by setting a solvent in which a water solvent or water, and a hydrophilic solvent such as methanol, and acetic acid is mixed, in a subcritical state, and then by performing an extraction treatment of an object to be extracted such as seeds, leaves, and stems of Macleaya cordata and the like for 1 minute to 24 hours, preferably 1 minute to 60 minutes, and more preferably 3 minutes to 10 minutes. As to the subcritical conditions, a pressure of 0.2 MPa to 15 MPa, and a temperature of 100°C to 200°C are preferably used.

When a plant extract is obtained from a plant containing sanguinarine, such as Macleaya cordata, and chelidoniummajus by the method described above, a living body or a dried body can be used as the plant material. However, in the case where the drying is insufficient, or the dried body is left for a long time after the drying, in some cases, mold tends to easily generated, and thus it is considered that there may be a case where the stability of the extracted sanguinarine is reduced. Even in the actual verification, on the 7th day after the harvesting, the significant reduction was already observed. Therefore, even in the case where drying is performed, it is preferable to be subjected to the extraction treatment earlier.

In addition, the plant extract obtained as in the above, is obtained in a liquid form that has been extracted into an extraction solvent, and by adding an acid or a base into this solvent, the neutralization treatment may be performed. Further, the plant extract is subjected to a treatment by using a vacuum concentration method, or a gel adsorption method, and as a result may be a liquid in which the sanguinarine concentration is increased. In addition, by using a spray drier, a vacuum dryer, or the like, the plant extract can be processed into a powder form. Further, the extract processed into a powder form is dissolved into another solvent other than the extraction solvent, and as a result the handling of the plant extract becomes easy, and also the preservation stability can be increased. Furthermore, when the purity of the sanguinarine contained in the plant extract is tried to be increased, the plant extract containing high purity sanguinarine can be obtained by performing adsorption purification with an ion exchange resin, silica gel, activated

carbon, and the like, or by performing purification with column chromatography, recrystallization, or the like.

In the composition according to the present invention, the plant extract obtained as in the above as it is can be used, and within a range in which the activity of the sanguinarine that is an active ingredient is not lost and an adverse effect is not exerted on the plant to be applied, a plant extract in which a secondary treatment has been performed, may be used. Further, not only the plant extract, but also the sanguinarine obtained by chemical synthesis, or the sanguinarine obtained by microbial fermentation may be used for a composition of the present invention. In addition, the composition of the present invention may be processed not only into a liquid form, but with a conventional manner also into a powdery form, a granular form, a suspension form, or the like.

The content of active ingredient in a composition of the present invention, that is, the content of sanguinarine, is not particularly limited, however, in order to obtain the concentration to which the composition of the present invention is diluted, and at which the composition can be used, the content of sanguinarine is preferably 10 ppm or more, and more preferably 100 ppm or more. Further, the amount of the composition of the present invention per application, although the amount depends on the weight of the plant body, if the composition is applied to a seedling of an ordinary edible plant, is as the content of sanguinarine per a plant body, preferably 0.001 μg to 10 mg, more preferably 0.005 μg to 2 mg, and still more preferably 0.01 μg to 0.5 mg. Even if the application is performed at such a low concentration, by the composition of the present invention, the environmental stress resistance for a plant that should be protected can be improved. In addition, in the application for a plant body by the composition of the present invention, the environmental stress resistance for a plant that should be protected can be sufficiently improved by performing the application only once throughout the entire cultivation period. In order to sufficiently improve the environmental stress resistance, it is preferable to apply the composition multiple times.

Specifically, the resistance to the high temperature means the resistance to intense heat in summer, and the resistance to the dry stress means the resistance to a state in which there is no water for a certain period of time.

Further, the improvement of the environmental stress resistance means that it is judged that the plant is in more favorable state as compared with a plant in the control plot, in the growth situation of plant body (plant body fresh weight, extended degree, and the like), the condition that is visually evaluated from the appearance, the average degree of damage, or the like. In addition, the target of the improvement of the environmental stress resistance is not limited to the entire plant body, and may be at least one of the plant organs including a flower, a leaf, a fruit, a stem, a root, or the like.

The plant species that should be protected, which is subjected to the improvement of the environmental stress resistance, may be either a dicotyledon plant or a monocotyledon plant, and is not particularly limited. However, examples of the plant species that should be protected include a solanaceous plant such as a tomato, an eggplant, a green pepper, a red pepper, and a potato; an umbelliferae plant such as a carrot, celery, and Bupleurum falcatum; a chenopodiaceae plant such as a beet, and spinach; an asteraceae plant such as garland chrysanthemum, lettuce, a burdock, and a gerbera; a leguminous plant such as a soybean, a pea, licorice, alfalfa, and a sweet pea; a liliaceae plant such as a leek, an onion, garlic, and a tulip; a rosaceae plant such as a strawberry, a rose, an apple, a peach, and a pear; a cucurbitaceous plant such as a watermelon, a melon and a cucumber; a convolvulaceae plant such as a sweet potato; a theaceae plant such as tea, a camellia; a cupressaceae plant such as a cedar and a cypress; a myrtaceae plant such as an eucalyptus; an oleaceae plant such as an olive; a rutaceae plant such as a satsuma mandarin orange and a lemon; a vitaceae plant such as a grape; a labiatae plant such as perilla, basil, mint, a rosemary, and sage; a grass plant such as a rice plant, maize, grass, and ryegrass; a cruciferous plant such as a Komatsuna (Japanese mustard spinach), a qing-geng-cai (Chinese cabbage), a broccoli, and a cabbage; a musaceae plant such as a banana; an anacardiaceae plant such as a mango; a caricaceae plant; and other tropical plants.

Further, in the composition of the present invention, a spreading agent, a surfactant, a water-soluble polymer, a lubricant, an antioxidant, a preservative, or the like may be added. In addition, by adding an additive having a sterilization or pest action, a synergistic action may be tried to be obtained. As described above, depending on the trading condition in the market, the storage condition, and the use condition, not only the composition for improving the environmental stress resistance of the present invention includes a plant extract containing sanguinarine or a simple substance of sanguinarine alone, but also a change can be added to the composition to the extent not to lose the effectiveness as the sanguinarine.

As to the application method of the composition of the present invention, when the composition is in a powdery form or a granular form, the composition can be applied by direct scattering, or by scattering, spraying, pouring, watering, or the like after the composition is dissolved in a solvent such as water, and then the resultant is diluted to the predetermined concentration. Further, when the composition of the present invention is in a liquid form or a suspension form, the composition can be applied by direct scattering, or by scattering, spraying, pouring, watering, or the like after the composition is diluted to the predetermined concentration. In addition, the application of the composition of the present invention is performed to at least one of the plant organs (a flower, a leaf, a fruit, a stem, a root, or the like), or to the base of the plant body or the soil, of the plant that should be protected.

As shown in the Examples described below, by the application of the composition of the present invention before the plant is subjected to the environmental stress, the applied plant has an effect that the plant body is continuously

maintained during the receiving of the environmental stress, or the plant body is rapidly restored after the receiving of the environmental stress. As described above, only by the application of the composition of the present invention in advance, the environmental stress resistance can be improved, therefore, the plant that should be protected, in particular, a crop plant, a garden plant, and the like can be protected from the environmental stress by a simple process. In addition, the timing of the application of the composition of the present invention may be during the plant that should be protected is received the environmental stress.

Hereinafter, Examples of the present invention are shown.

Example 1

[Production of an extract of Macleaya cordata 1]

1 kg of fruits with pods of Macleaya cordata, which were born and matured from the summer to the autumn, was collected, left in a well-ventilated place overnight, and naturally dried. In a fruit of Macleaya cordata and a seed in the fruit, sanguinarine is largely contained. In the following day, 200 g of the fruits with pods (containing seeds therein) was immersed in 5 L of dilute hydrochloric acid (0.1 N) of which the temperature had been adjusted to 60°C. Further, the fruits were pressed from the above with a wooden stick, and while compressing the fruits and seeds, the extraction was prompted. After that, the keeping temperature of 60°C was released, and the fruits and seeds were left in the dilute hydrochloric acid for 1 hour for the extraction. After being left, the dilute hydrochloric acid containing the fruits and seeds was filtered through a filter paper of 60 cm in diameter, the filtrate was collected, and thus a crude extract of the first round of the fruits and seeds of Macleaya cordata was obtained.

The resultant residue was again immersed in 5 L of dilute hydrochloric acid (0.1 N) of which the temperature had been adjusted to 60°C, and then in the same manner as in the above, the residue of the fruits and seeds was pressed from the above with a wooden stick, and while compressing the fruits and seeds, the extraction was prompted. The holding temperature of 60°C was released, and the residue of the fruits and seeds was left in the dilute hydrochloric acid for 1 hour for the extraction, and then the dilute hydrochloric acid containing the fruits and seeds was filtered through a filter paper of 60 cm in diameter, the filtrate was collected, and thus a crude extract of the second round of the fruits and seeds of Macleaya cordata was obtained. Then, an extract in which the crude extract of the first round and the crude extract of the second round were included together was used as the crude extract of the fruits and seeds of Macleaya cordata.

Next, the crude extract of the fruits and seeds of Macleaya cordata was subjected to the purification. Spherical silica gel for purification (Wakogel (registered trademark) 50C18 manufactured by Wako Pure Chemical Industries, Ltd.) was treated by 95% ethanol and activated, and then the left alcohol was replaced with water. The silica gel was placed on a surface of a filter paper that was arranged in a funnel, and thus the preparation of filtration device was finished. From the above on the silica gel, the above-obtained crude extract of the fruits and seeds of Macleaya cordata was poured onto the silica gel, as a result, the sanguinarine that is an intended substance as a main ingredient was adsorbed onto the silica gel. Further, the silica gel was washed with tap water, then eluted the adsorbate with 95% ethanol, and thus around 700 mL of the extraction liquid of the fruits and seeds of Macleaya cordata was obtained. By using HPLC, when the concentration of the sanguinarine that was contained in the obtained extraction liquid was measured, it was confirmed that in this extraction liquid, around 1,500 ppm of the sanguinarine derived from the fruits and seeds of Macleaya cordata was contained. The obtained extraction liquid is hereinafter described as "TG extract". In the following Examples 3, and 5 to 8, this "TG extract" was diluted to various concentrations, and used for each test.

Example 2

[Production of an extract of Macleaya cordata 2]

1 kg of matured fruits with pods of Macleaya cordata was collected, left in a well-ventilated place overnight, and naturally dried. In the following day, the fruits with pods (containing seeds therein) were subjected to boiling (thermal) extraction and subcritical water extraction. As the solvent, in both the boiling extraction and the subcritical water extraction, 500 mL of the solvent in which water, methanol, and acetic acid were mixed at a ratio of 10 : 9 : 1 (volume ratio) was used.

The boiling extraction was performed for 20 g of the fruits (containing seeds therein) under the conditions of normal pressure and a boiling time of 30 minutes.

On the other hand, the subcritical water extraction was performed for 20 g of the fruits (containing seeds therein) under the following three conditions: the conditions of a temperature of 100°C, a pressure of 3 MPa, and a treatment time of 5 minutes; the conditions of changing only the temperature of the above to 140°C; and the conditions of changing only the temperature of the above to 180°C.

The concentration of the sanguinarine contained in the obtained boiling extraction liquid and each of the subcritical water extraction liquids was measured by using HPLC (UPLC (registered trademark), manufactured by Nihon Waters K.K.). The results were shown in Table 1. The values described in each of the extraction processes show the peak area of the ingredient corresponding to the sanguinarine contained in each of the extraction liquids in the HPLC measurement.

[Table 1]

| m/z | Retention time (minutes) | Boiling extraction for 30 minutes | Subcritical water extraction at 3 MPa for 5 minutes | | |
|---|---|---|---|---|---|
| | | | 100°C | 140°C | 180°C |
| 332.1691 | 9.64 | 400 | 1400 | 1300 | 1300 |

As shown in Table 1, it was confirmed that the peak area of the sanguinarine is 400 in the boiling extraction process, but 1300 to 1400 in the subcritical water extraction process. According to these results, as compared with the boiling extraction, in the subcritical water extraction, the sanguinarine was extracted at a higher concentration of three times or more, and thus it was found that a highly efficient extraction can be realized. According to the results of Examples 1 and 2, it was confirmed that the sanguinarine can be extracted from Macleaya cordata by various extraction methods.

Example 3

[Evaluation of high temperature resistance 1: Arabidopsis thaliana]

Seeds of Arabidopsis thaliana were sowed and cultivated in a plastic pot in which culture soil was put. The cultivation environment conditions were a cycle of [bright place for 16 hours + dark place for 8 hours] indoors, and a temperature of 23°C. The TG extract (sanguinarine content concentration: around 1500 ppm) obtained in Example 1 was diluted with water, and a sample liquid for each test plot was respectively prepared such that the sanguinarine content concentration is 2 ppm, 20 ppm, 200 ppm, or 0 ppm (without TG extract, only water). Each sample liquid was applied dropwise using a dropper on a leaf part of the Arabidopsis thaliana on the 25th day after the start of cultivation. The dropping amount was 0.5 mL per a plant body. Therefore, the sanguinarine amount applied per a plant body in each test plot was 0.001 mg in the test plot of 2 ppm, 0.01 mg in the test plot of 20 ppm, and 0.1 mg in the test plot of 200 ppm. After the dropping, under the initial cultivation environment conditions, the cultivation was continued for 2 days, then the room temperature was increased to 55°C, and high temperature exposure was performed at 55°C for 1 hour in a bright place. After that, the conditions were returned to the initial cultivation environment conditions, and the cultivation was continued for 10 day. Further, except for not performing the high temperature exposure at 55°C, under the same cultivation environment conditions as those described above, Arabidopsis thaliana was cultivated, and then a test in which each sample liquid is applied dropwise was also performed. In addition, the number of samples N in each test plot and the control plot was 4.

Fig. 1 shows the result of the measurement of fresh weight of a plant body of Arabidopsis thaliana in each test plot (2 ppm, 20 ppm, or 200 ppm) and the control plot (0 ppm) on the 10th day after the high temperature exposure at 55°C for 1 hour. Further, Fig. 2 shows the appearance of Arabidopsis thaliana in the test plot (20 ppm) and the control plot, on the 10th day after the high temperature exposure at 55°C for 1 hour. From the measurement results of the weight of Arabidopsis thaliana shown in Fig.1, it was confirmed that in any one of the plant bodies of a sample liquid in which the concentration of sanguinarine is 2 ppm, 20 ppm, or 200 ppm, the growth was relatively favorable as compared with that in the control plot (0 ppm).

In addition, also from the evaluation of the appearance, it was confirmed that in the plant body of a sample liquid in which the concentration of sanguinarine is 20 ppm, the growth is clearly favorable, and the environmental stress resistance against the high temperature is improved, as compared with that in the control plot (0 ppm).

Example 4

[Evaluation of high temperature resistance 2: Arabidopsis thaliana]

In the evaluation of high temperature resistance of Arabidopsis thaliana in Example 3, an acid solvent extract liquid of Macleaya cordata (TG extract) obtained in Example 1 was used, also in the case of using a high purity reagent of sanguinarine, it was tested whether the environmental stress resistance against the high temperature of a plant is improved or not, as in the Example 3.

As a sanguinarine reagent available on the market, a sanguinarine chloride hydrate (S5890-25MG manufactured

by Sigma-Aldrich Japan K.K.) was obtained, the sanguinarine chloride hydrate was dissolved in water such that the sanguinarine concentration is 0.2 ppm, 2 ppm, or 20 ppm, and thus a sample liquid for each test plot was respectively prepared. In addition, as a sample liquid for the control plot, a 0.5% DMSO solution was prepared. By using these sample liquids, the following tests were performed.

Seeds of Arabidopsis thaliana were sowed and cultivated in a rockwool cube which had been saturated with a diluent of the HYPONEX (registered trademark) diluted by 1,000 times. The cultivation environment conditions were a cycle of [bright place for 16 hours + dark place for 8 hours], and a temperature of 22°C. On around the strain of Arabidopsis thaliana on the 14th day after the start of cultivation, a sample liquid composed of an aqueous sanguinarine solution that had been adjusted to various concentrations, and a 0.5% DMSO solution for the control plot were respectively applied dropwise using a dropper. The dropping amount was set to 100 μL per a plant body. Therefore, the sanguinarine amount applied per a plant body in each test plot was 0.02 μg in the test plot of 0.2 ppm, 0.2 μg in the test plot of 2 ppm, and 0.002 mg in the test plot of 20 ppm. After the dropping, under the initial cultivation environment conditions, the cultivation was continued for 2 days, then the room temperature was increased to 35°C, and exposure was performed for 1 hour in a bright place. Further, the room temperature was increased to 45°C, and high temperature exposure was performed for 2 hours in a dark place. After that, the conditions were returned to the initial cultivation environment conditions, and the cultivation was continued for 4 days. In addition, the number of samples N in each test plot and the control plot was 18 (6 plant bodies were tested per one cultivation container, and the three cultivation containers were used).

Fig. 3 shows the appearance of Arabidopsis thaliana in each test plot (0.2 ppm, 2 ppm, or 20 ppm) and the control plot (0.5% DMSO) on the 4th day after the high temperature exposure at 35°C for 1 hour and at 45°C for 2 hours.

In addition, Fig. 4 shows a graph showing the average degree (%) of damage of Arabidopsis thaliana in the present Examples. The state of the grown true leaves of Arabidopsis thaliana on the 4th day after the high temperature exposure under the above conditions was visually evaluated on a four level scale (index, 3: plant death, 2: partial plant death, 1: partial whitening, and 0: normal), and by assigning the values to the following equation, the average degree of damage was calculated.

$$\text{Damage degree} = \Sigma\ (3 \times N3 + 2 \times N2 + 1 \times N1) / (3 \times \text{total number of individuals})$$

N1 to N3: number of individuals of each index

From the appearance of Arabidopsis thaliana shown in Fig. 3, and the average degree (%) of damage shown in Fig. 4, it was confirmed that even in the plant body in any one of the test plots in which each concentration of sanguinarine is 0.2 ppm, 2 ppm, or 20 ppm, the growth was relatively favorable as compared with that in the control plot (0.5% DMSO solution), and as the dosage of sanguinarine is increased, the average degree of damage of Arabidopsis thaliana is reduced. In addition, it was found that in the plant body in the test plot in which the concentration of sanguinarine was 20 ppm (the dosage of sanguinarine was 0.002 mg per a plant body), the average degree of damage was significantly as low as less than 10%. According to these results, as in the acid solvent extract liquid of Macleaya cordata (TG extract) used in Example 3, it was confirmed that even in the case of using a high purity reagent of sanguinarine, the environmental stress resistance against the high temperature of a plant was improved.

Example 5

[Evaluation of high temperature resistance 3: tomato]

In Examples 3 to 4, as to the Arabidopsis thaliana that is a model organism of plant, the effect of improving the environmental stress resistance of sanguinarine was confirmed, therefore, continuously, the test to confirm whether the same effect is observed or not also in other plants was performed. As the plant to be tested, a tomato that is an edible plant was selected.

Seeds of tomato were sowed and cultivated in a seedling-raising apparatus. The cultivation environment conditions were a cycle of [bright place for 16 hours + dark place for 8 hours] indoors, and a temperature of 23°C. The TG extract (sanguinarine content concentration: around 1500 ppm) obtained in Example 1 was diluted with water, and a sample liquid for each test plot was respectively prepared such that the sanguinarine content concentration is 2 ppm, 20 ppm, or 0 ppm (without TG extract, only water). Further, into the culture soil around the base of the tomato seedling in which seed leaves had been developed on the 13th day after the start of cultivation, each sample liquid was respectively poured and applied. The application amount was 200 mL for 14 seedlings, that is, around 14 mL per a plant body was applied. Therefore, the sanguinarine amount applied per a plant body in each test plot was 0.028 mg in the test plot of

2 ppm, and 0.28 mg in the test plot of 20 ppm. After the application, under the initial cultivation environment conditions, 2 weeks after the application, tomato seedling in which one true leaf had been started to develop was placed in a culture apparatus, and high temperature exposure was performed under an atmosphere of 40°C for 1 week. During the high temperature exposure, the culture broth was supplemented once a day. In addition, the number of samples N in each test plot and the control plot was 14.

Fig. 5 shows the appearance of tomato seedling in a test plot (2 ppm, or 20 ppm) and the control plot (0 ppm, or no application) after the high temperature exposure at 40°C for 1 week. According to this, it was confirmed that in any one of the plant bodies of a sample liquid in which the sanguinarine content concentration is 2 ppm, or 20 ppm, the growth is clearly favorable, and the environmental stress resistance against the high temperature is improved, as compared with those in the control plot (0 ppm, or no application). In addition, it was confirmed that in the tomato seedling in the test plot in which the sanguinarine content concentration is 20 ppm, normal leaves were more frequently observed as compared with those in the test plot of 2 ppm, and as the dosage of sanguinarine is increased, the effect of improving the environmental stress resistance of the tomato seedling is increased.

Example 6

[Evaluation of dry resistance 1: Komatsuna]

Seeds of Komatsuna were sowed in a plastic pot in which culture soil was put, and cultivated 3 plant bodies per a pot. The cultivation environment conditions were a cycle of [bright place for 16 hours + dark place for 8 hours] indoors, and a temperature of 23°C. The TG extract (sanguinarine content concentration: around 1500 ppm) obtained in Example 1 was diluted with water, and a sample liquid used for each test plot was respectively prepared such that the sanguinarine content concentration is 1.5 ppm, 15 ppm, or 0 ppm (without TG extract, only water). Then, on the base of the Komatsuna on the 14th day after the start of cultivation, each sample liquid was respectively sprinkled. The application amount was 10 mL per a pot, and the application amount per a plant body was 3.3 mL. Therefore, the sanguinarine amount applied per a plant body in each test plot was 0.005 mg in the test plot of 1.5 ppm, and 0.05 mg in the test plot of 15 ppm. After the sprinkling, without giving any water, the cultivation was continued for 14 days. The number of samples N in each test plot and the control plot was 3.

Fig. 6 shows the results of the measurement of fresh weight of a plant body of the Komatsuna that was cultivated under a dry condition without giving any water for 14 days in each test plot (1.5 ppm, or 15 ppm) and the control plot (0 ppm). From the measurement results of the weight of Komatsuna shown in Fig.6, it was confirmed that in any one of the test plots in which the sanguinarine content concentration in each sample liquid is 1.5 ppm, or 15 ppm, the growth is relatively favorable, the dry resistance is favorable, and the weight of around 2 to 3 times is maintained without withering, as compared with those in the control plot (0 ppm). According to these results, it was found that by administering sanguinarine, the environmental stress resistance against the drying of plant is improved.

Example 7

[Evaluation of dry resistance 2: alfalfa]

Into a plastic pot of 10 cm in diameter, Peatban (registered trademark) was put to the around 80% of the volume of the pot, and then in the plastic pot 15 seeds of alfalfa (Medicago sativa L. "Type P" cultivar, Nakahara Saishujo, Fukuoka, Japan) were sown. First, the cultivation was performed by applying a newspaper over the pot at normal temperature in a room. On around the 4th day after the start of cultivation, alfalfa sprouted, and thus the plastic pot was moved to the outdoor to cultivate the alfalfa therein. On the 7th day after the start of cultivation, the sprouted alfalfa was subjected to thinning in each pot, and 4 plant bodies were left in each pot. The TG extract (sanguinarine content concentration: around 1500 ppm) obtained in Example 1 was diluted with water, and a sample liquid for each test plot was respectively prepared such that the sanguinarine content concentration is 0.015 ppm, 0.15 ppm, 1.5 ppm, 15 ppm, or 0 ppm (without TG extract, only water). Then, on the 9th day after the start of cultivation, each sample liquid was respectively sprayed onto leaves of the alfalfa from the distance of around 5 cm away from the leaves. The spray amount was set to 0.73 mL per a plant body. Therefore, the sanguinarine amount applied per a plant body in each test plot was 0.011 μg in the test plot of 0.015 ppm, 0.11 μg in the test plot of 0.15 ppm, 1.1 μg in the test plot of 1.5 ppm, and 0.011 mg in the test plot of 15 ppm. After the spray treatment, from the 10th day to the 25th day, the watering was stopped, and the alfalfa was cultivated under the dry condition. On the 25th day after the start of cultivation, a saucer was placed under the pot and the watering was sufficiently performed to the pot, and then under the initial cultivation environment conditions, the cultivation was continued until the 33rd day after the start of cultivation. During the cultivation, the moisture content in the soil (Peatban, registered trademark) of each pot was continuously measured by a handy moisture content meter, and the state of the dry exposure was confirmed. In addition, the number of samples N in each test plot and the

control plot was 4.

Fig. 7 shows the changes in saturated moisture content (%) of the soil in each pot during the cultivation test. It was found that on the 10th day after the start of cultivation, the watering was stopped, thus the moisture content in the soil was gradually reduced at a constant speed, and on the 20th day after the start of cultivation, the moisture content in the soil became almost zero. This state was continued until the 25th day after the start of cultivation, on which the re-watering was started. Therefore, it was confirmed that the tested alfalfa had been exposed to the rigor dry state for at least 5 days. Further, when the re-watering was started on the 25th day after the start of cultivation, the moisture content in the soil was increased to near 100%.

Fig. 8 shows the appearance of alfalfa in a test plot (0.015 ppm, 0.15 ppm, 1.5 ppm, or 15 ppm) and the control plot (0 ppm) after the dry exposure before the re-watering (on the 25th day after the start of cultivation). In addition, Figs. 9(a) to 9(c) show the appearance of alfalfa in each test plot and the control plot on the 7th day after the dry exposure (on the 33rd day after the start of cultivation). Further, Fig. 10 shows the results of the measurement of the fresh weight of the plant body of alfalfa in each test plot and the control plot on the 7th day after the dry exposure (on the 33rd day after the start of cultivation).

When the alfalfa after the dry exposure was observed, as shown in Fig. 8, the alfalfas both in a test plot and in the control plot lost the vitality, and were about to wither. On the other hand, when the alfalfa on the day on which one week has elapsed after the dry exposure was observed, as shown in Figs. 9(a) to 9(c), as to the plant body in a test plot, in which a TG extract containing sanguinarine had been administered, it was confirmed that although a difference in degree was observed depending on the sanguinarine concentration, the alfalfa was almost recovered, the leaf color was favorable, and the alfalfa further would grow. However, the plant body in the control plot died without recovering. Further, from the measurement results of the weight of alfalfa shown in Fig. 10, it was confirmed that in any one of the test plots in which the sanguinarine content concentration in each sample liquid is 0.015 ppm, 0. 15 ppm, 1. 5 ppm, or 15 ppm, the growth is relatively favorable, as compared with that in the control plot (0 ppm), and even when the sanguinarine content concentration was as low as 0.15 ppm, a high effect was exhibited. From these results, it was found that by administering sanguinarine, the environmental stress resistance against the drying of plant is improved.

Example 8

[Evaluation of dry resistance 3: qing-geng-cai]

Into a plastic pot of 10 cm in diameter, Peatban (registered trademark) was put to the around 80% of the volume of the pot, and then in the plastic pot 12 seeds of qing-geng-cai were sown. The plastic pot was placed in the outdoor, on the 7th day after the start of cultivation, the qing-geng-cai was subjected to thinning in each pot, and 4 plant bodies were left in each pot. The TG extract (sanguinarine content concentration: around 1500 ppm) obtained in Example 1 was diluted with water, and a sample liquid for each test plot was respectively prepared such that the sanguinarine content concentration is 0.015 ppm, 0.15 ppm, 1.5 ppm, 15 ppm, or 0 ppm (without TG extract, only water). Then, on the 12th day after the start of cultivation, each sample liquid was respectively sprayed onto leaves of the qing-geng-cai from the distance of around 5 cm away from the leaves. The spray amount was set to 0.73 mL per a plant body. Therefore, the sanguinarine amount applied per a plant body in each test plot was 0.011 μg in the test plot of 0.015 ppm, 0.11 μg in the test plot of 0.15 ppm, 1.1 μg in the test plot of 1.5 ppm, and 0.011 mg in the test plot of 15 ppm. After the spray treatment, from the 12th day to the 26th day, the watering was stopped, and the qing-geng-cai was cultivated under the dry condition. On the 26th day after the start of cultivation, a saucer was placed under the pot and the watering was sufficiently performed to the pot, and then under the initial cultivation environment conditions, the cultivation was continued until the 33rd day after the start of cultivation. In addition, the number of samples N in each test plot was 4, and the number of samples N in the control plot was 8.

Fig. 11 shows the appearance of qing-geng-cai in each test plot and the control plot on the 7th day after the dry exposure (on the 33rd day after the start of cultivation). Further, Fig. 12 shows the results of the measurement of the fresh weight of the plant body of qing-geng-cai in each test plot and the control plot on the 7th day after the dry exposure (on the 33rd day after the start of cultivation).

As shown in Fig. 11, as to the plant body in the test plot, in which a TG extract containing sanguinarine had been administered, it was confirmed that although a difference in degree was observed depending on the sanguinarine concentration, the qing-geng-cai was almost recovered, the leaf color was favorable, and the qing-geng-cai further would grow. However, the plant body in the control plot died without recovering. Further, from the measurement results of the weight of qing-geng-cai shown in Fig. 12, it was confirmed that in any one of the test plots in which the sanguinarine content concentration in each sample liquid is 0.015 ppm, 0.15 ppm, 1.5 ppm, or 15 ppm, the growth is relatively favorable, as compared with that in the control plot (0 ppm), and even when the sanguinarine content concentration was as low as 0.15 ppm, a high effect was exhibited. From these results, it was found that by administering sanguinarine, the environmental stress resistance against the drying of plant is improved.

INDUSTRIAL APPLICABILITY

The composition for improving the environmental stress resistance of a plant of the present invention, the active ingredient of which has been clarified, thus can be applied to a plant that is required to be safe, such as an edible plant. Further, a stable effect of improving the environmental stress resistance can be provided to a plant that should be protected.

## Claims

1. Use of a composition comprising

at least one kind of sanguinarine or a salt thereof represented by the following formula (I), as an active ingredient

[Chemical formula 1]

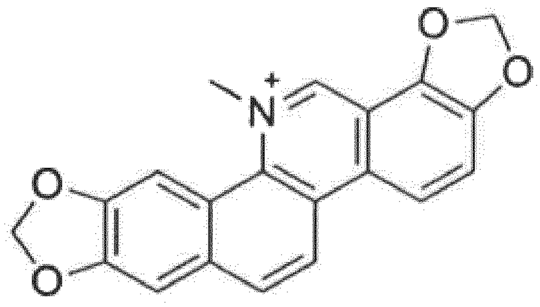

(I)

,

for improving environmental stress resistance of a plant,
wherein the environmental stress is high temperature stress, dry stress, or high temperature stress and dry stress.

2. Use of the composition for improving environmental stress resistance of a plant according to Claim 1,

wherein the active ingredient is a substance derived from a plant containing at least one kind of the sanguinarine or a salt thereof.

3. Use of the composition for improving environmental stress resistance of a plant according to Claim 2,

wherein the substance derived from a plant is a substance derived from Macleaya cordata.

4. Use of the composition for improving environmental stress resistance of a plant according to Claim 3,

wherein the substance derived from Macleaya cordata is a substance derived from a seed of Macleaya cordata.

5. Use of the composition for improving environmental stress resistance of a plant according to Claim 2,

wherein the substance derived from a plant is an extract obtained by performing at least one extraction treatment selected from the group consisting of a solvent extraction treatment, a subcritical water extraction treatment, and a heat extraction treatment, to a plant containing at least one kind of the sanguinarine or a salt thereof.

6. A method for improving environmental stress resistance of a plant, comprising

applying the composition for improving environmental stress resistance of a plant as defined in any one of Claims 1 to 5, to a plant or soil before the plant is subjected to environmental stress.

**Patentansprüche**

1. Verwendung einer Zusammensetzung, die umfasst

   wenigstens eine Art von Sanguinarin oder eines Salzes davon, dargestellt durch die folgende Formel (I), als ein Wirkstoff
   [chemische Formel 1]

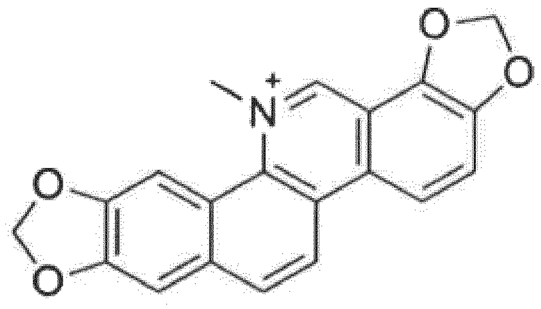

(I)

,

   für die Verbesserung der Umweltstressresistenz einer Pflanze,
   wobei der Umweltstress Hochtemperaturstress, Trockenstress oder Hochtemperaturstress und Trockenstress ist.

2. Verwendung der Zusammensetzung für die Verbesserung der Umweltstressresistenz einer Pflanze nach Anspruch 1,

   wobei der Wirkstoff eine Substanz ist, die aus einer Pflanze stammt, die wenigstens eine Sorte des Sanguinarins oder eines Salzes davon enthält.

3. Verwendung der Zusammensetzung für die Verbesserung der Umweltstressresistenz einer Pflanze nach Anspruch 2,

   wobei die Substanz, die aus einer Pflanze stammt, eine Substanz ist, die aus Macleaya cordata stammt.

4. Verwendung der Zusammensetzung für die Verbesserung der Umweltstressresistenz einer Pflanze nach Anspruch 3,

   wobei die Substanz, die aus Macleaya cordata stammt, eine Substanz ist, die aus einem Samen von Macleaya cordata stammt.

5. Verwendung der Zusammensetzung für die Verbesserung der Umweltstressresistenz einer Pflanze nach Anspruch 2,

   wobei die Substanz, die aus einer Pflanze stammt, ein Extrakt ist, der erhalten wird mittels Durchführen wenigstens einer Extraktionsbehandlung ausgewählt aus der Gruppe bestehend aus einer Lösungsmittelextraktionsbehandlung, einer unterkritischen Wasserextraktionsbehandlung und einer Wärmeextraktionsbehandlung an einer Pflanze, die wenigstens eine Sorte des Sanguinarins oder eines Salzes davon enthält.

6. Verfahren für die Verbesserung der Umweltstressresistenz einer Pflanze, umfassend

   Aufbringen der Zusammensetzung für die Verbesserung der Umweltstressresistenz einer Pflanze wie in einem der Ansprüche 1 bis 5 definiert auf eine Pflanze oder einen Boden bevor die Pflanze Umweltstress ausgesetzt wird.

## Revendications

1. Utilisation d'une composition comprenant
au moins un type de sanguinarine ou un sel de celle-ci représenté par la formule (I) suivante, en tant que principe actif

[Formule chimique 1]

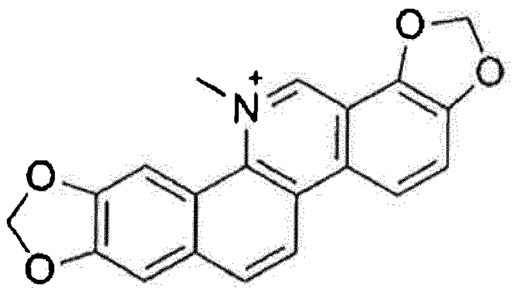

pour améliorer la résistance au stress environnemental d'une plante,
dans laquelle le stress environnemental est un stress dû à une température élevée, un stress dû à la sécheresse, ou un stress dû à une température élevée et un stress dû à la sécheresse.

2. Utilisation de la composition pour améliorer la résistance au stress environnemental d'une plante selon la revendication 1,
dans laquelle le principe actif est une substance dérivée d'une plante contenant au moins un type de sanguinarine ou un sel de celle-ci.

3. Utilisation de la composition pour améliorer la résistance au stress environnemental d'une plante selon la revendication 2,
dans laquelle la substance dérivée d'une plante est une substance dérivée de Macleaya Cordata.

4. Utilisation de la composition pour améliorer la résistance au stress environnemental d'une plante selon la revendication 3,
dans laquelle la substance dérivée de Macleaya Cordata est une substance dérivée d'une graine de Macleaya Cordata.

5. Utilisation de la composition pour améliorer la résistance au stress environnemental d'une plante selon la revendication 2,
dans laquelle la substance dérivée d'une plante est un extrait obtenu en effectuant au moins un traitement d'extraction choisi dans le groupe constitué par un traitement d'extraction par solvant, un traitement d'extraction par de l'eau sous-critique et un traitement d'extraction à chaud, sur une plante contenant au moins un type de sanguinarine ou un sel de celle-ci.

6. Procédé pour améliorer la résistance au stress environnemental d'une plante, comprenant
l'application de la composition pour améliorer la résistance au stress environnemental d'une plante telle que définie selon l'une quelconque des revendications 1 à 5, à une plante ou à un sol avant que la plante ne soit soumise à un stress environnemental.

[Fig. 1]

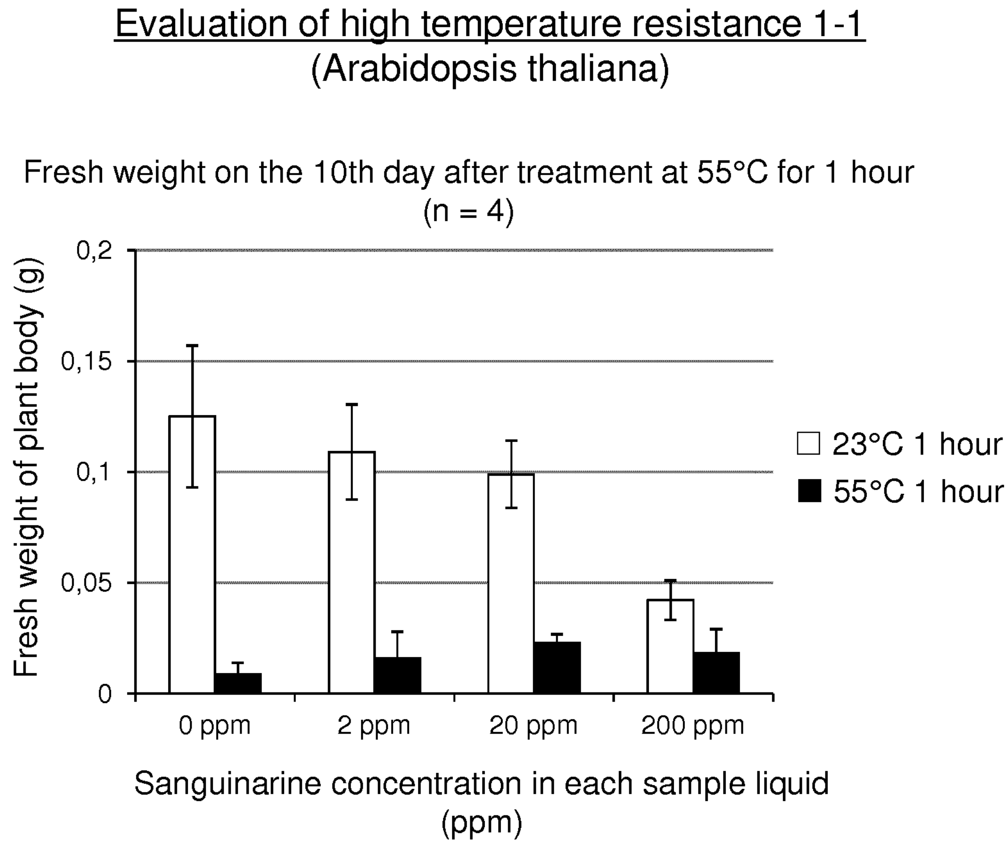


[Fig. 2]

Evaluation of high temperature resistance 1-2
(Arabidopsis thaliana)

State of plant body on the 10th day after treatment at 55°C for 1 hour

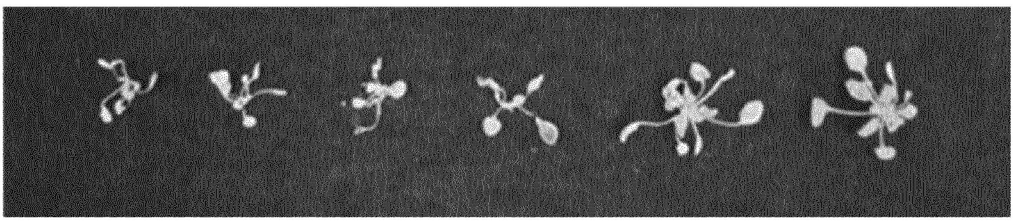

Control plot 0 ppm | Test plot 20 ppm

Sanguinarine concentration in each sample liquid

[Fig. 3]

Evaluation of high temperature resistance 2-1
(Arabidopsis thaliana)

State of plant body on the 4th day after high temperature treatment (on the 20th day after sowing)

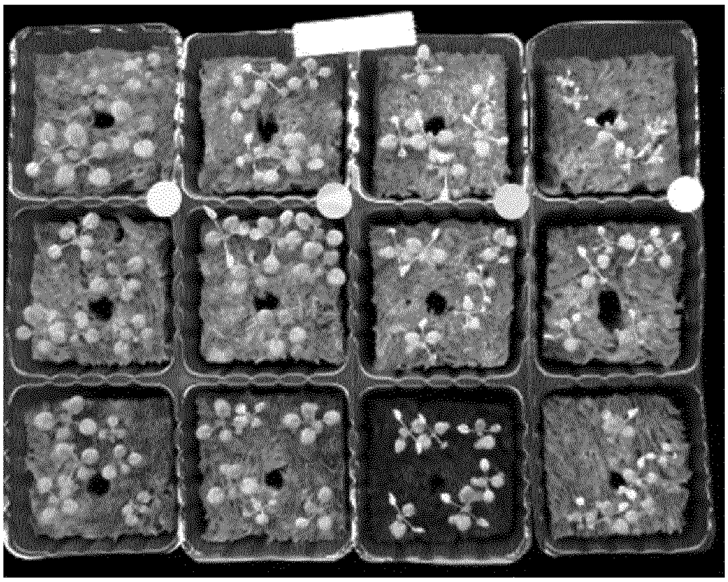

20ppm 2ppm 0.2ppm DMSO 0.5%

Sanguinarine concentration in sample liquid in test plot Control plot

[Fig. 4]

Evaluation of high temperature resistance 2-2
(Arabidopsis thaliana)

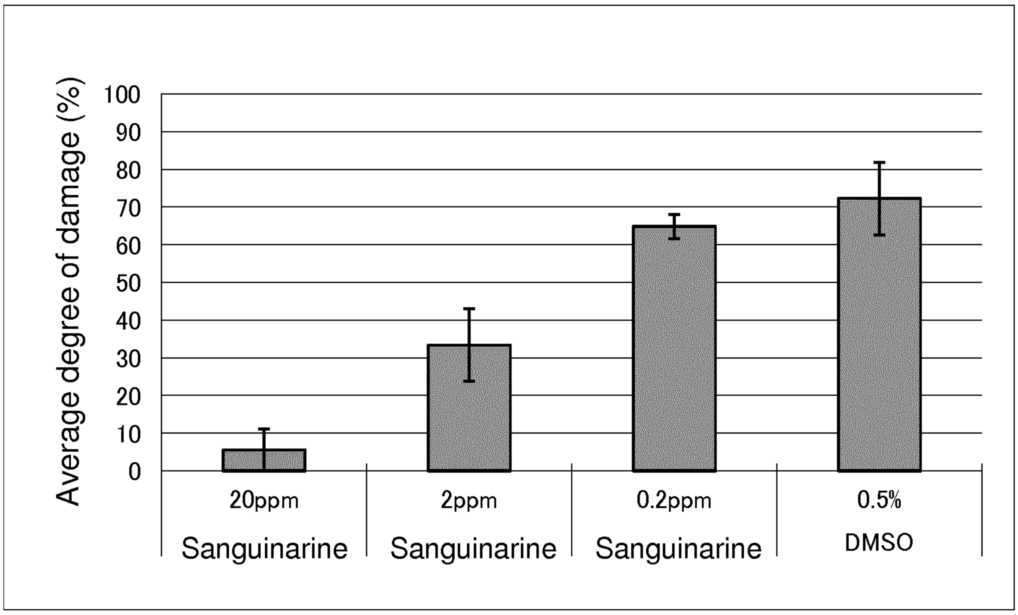

[Fig. 5]

Evaluation of high temperature resistance 3
(Tomato)

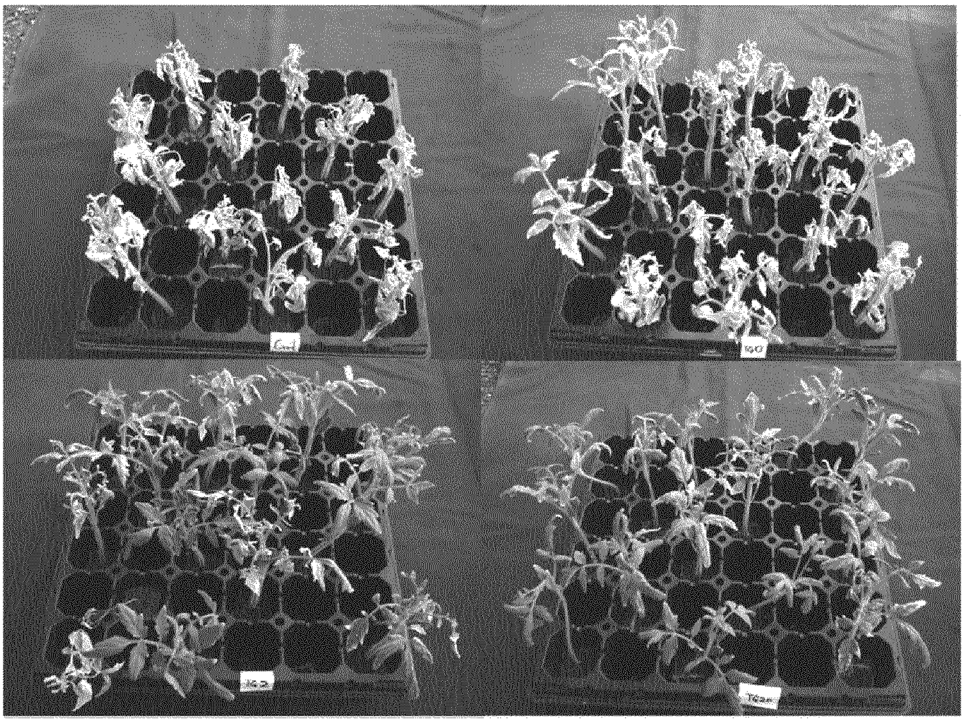

Sanguinarine concentration in sample liquid (ppm)

| | |
|---|---|
| **Non-application plot (0 ppm)** | **Control plot (0 ppm)** |
| **Test plot 2 ppm** | **Test plot 20 ppm** |

[Fig. 6]

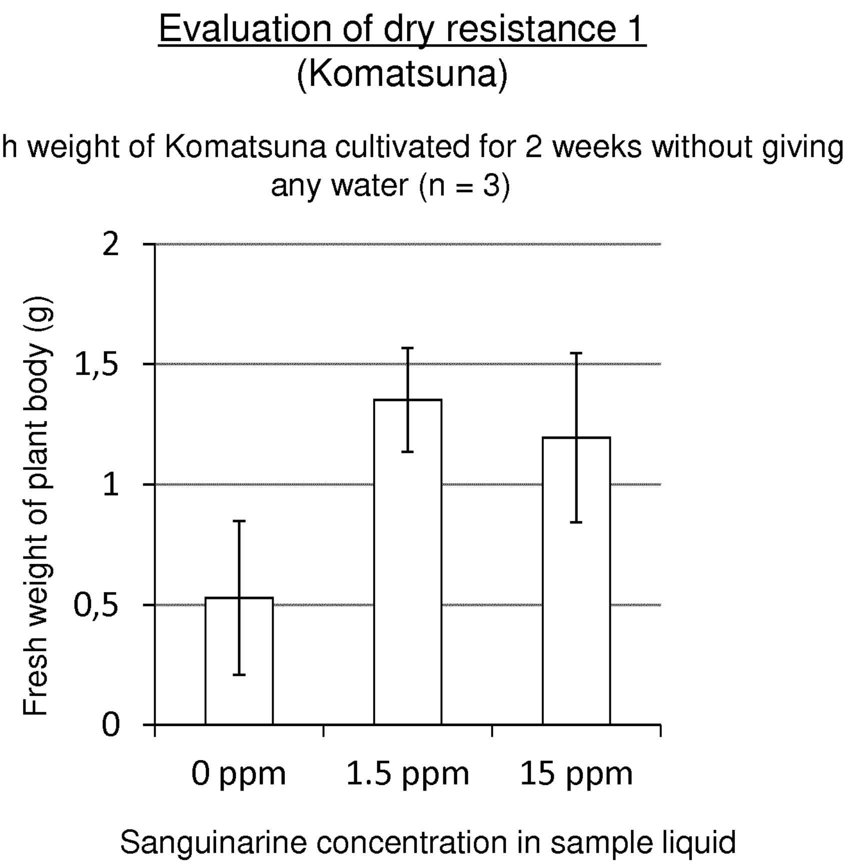
Evaluation of dry resistance 1
(Komatsuna)
Fresh weight of Komatsuna cultivated for 2 weeks without giving any water (n = 3)
Fresh weight of plant body (g)
2
1,5
1
0,5
0
0 ppm
1.5 ppm
15 ppm
Sanguinarine concentration in sample liquid

[Fig. 7]

## Evaluation of dry resistance 2-1
(Alfalfa)

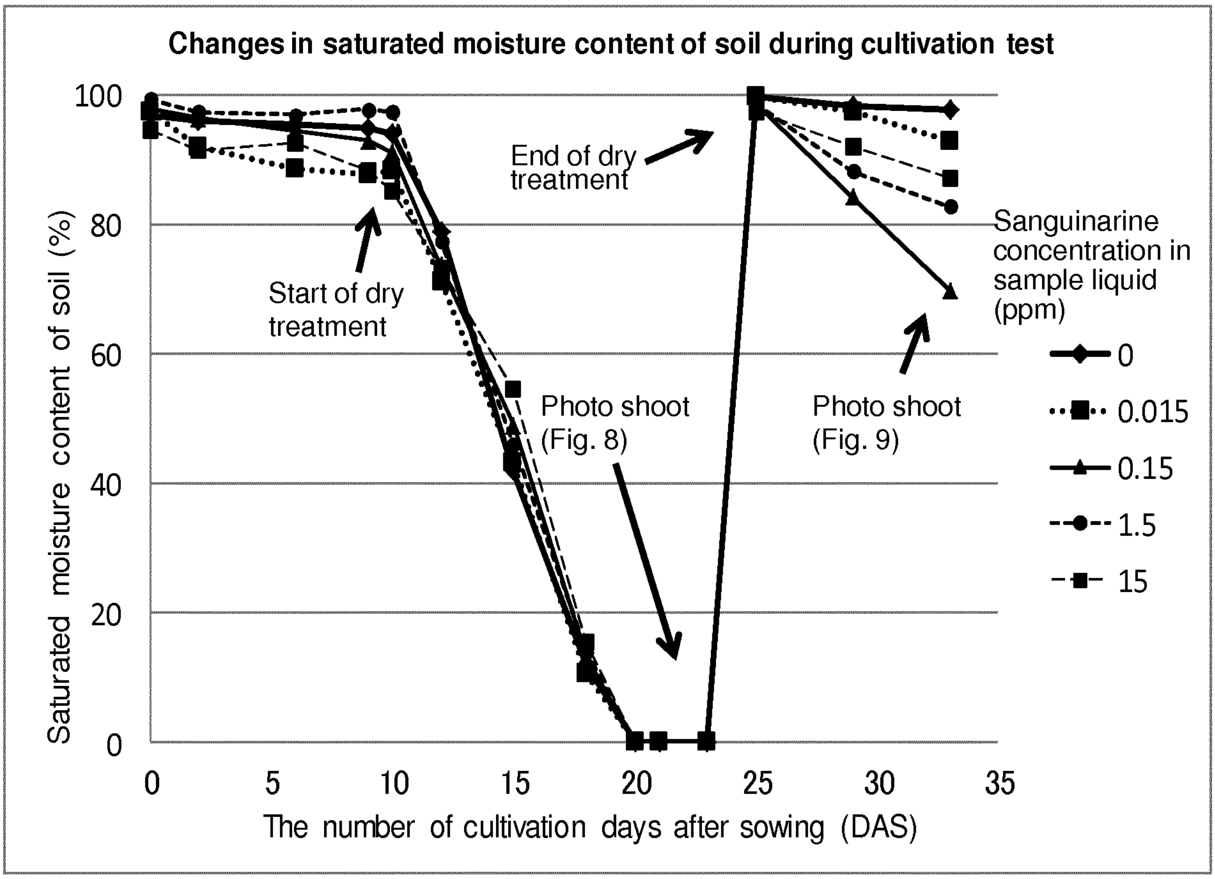


[Fig. 8]

## Evaluation of dry resistance 2-2
(Alfalfa)

State of plant body two weeks (25 DAS) after dry treatment

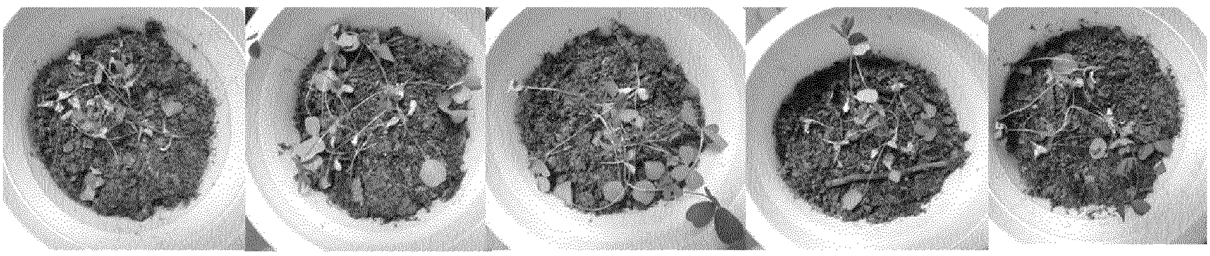

0 ppm 0.015 ppm 0.15 ppm 1.5 ppm 15 ppm

Sanguinarine concentration in sample liquid (ppm)

[Fig. 9]

## Evaluation of dry resistance 2-3
(Alfalfa)

State of plant body on the 7th day (33 DAS) after dry treatment

(a)

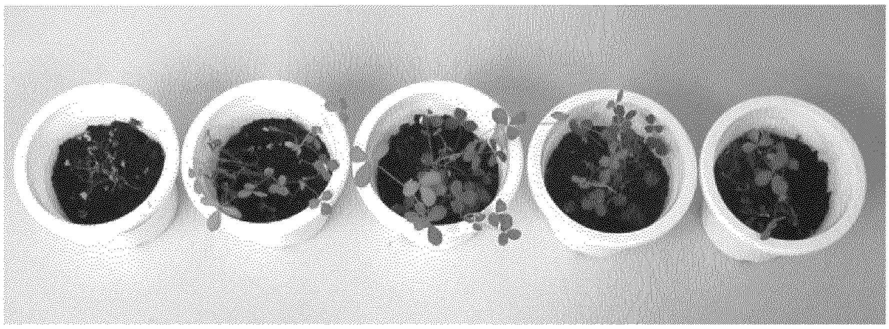

0 ppm 0.015 ppm 0.15 ppm 1.5 ppm 15 ppm

Sanguinarine content concentration in sample liquid

(b)

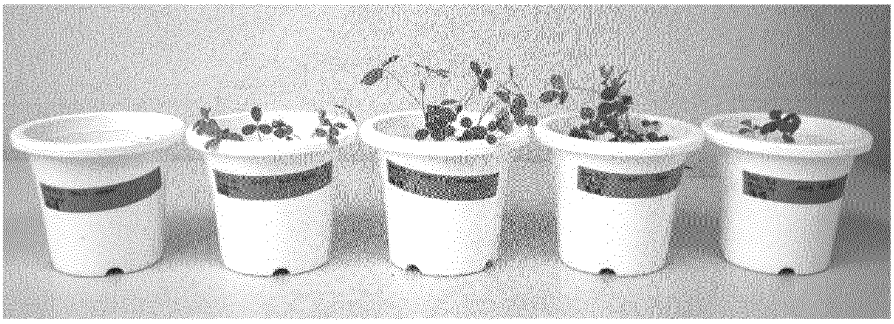

0 ppm 0.015 ppm 0.15 ppm 1.5 ppm 15 ppm

Sanguinarine content concentration in sample liquid

(c)

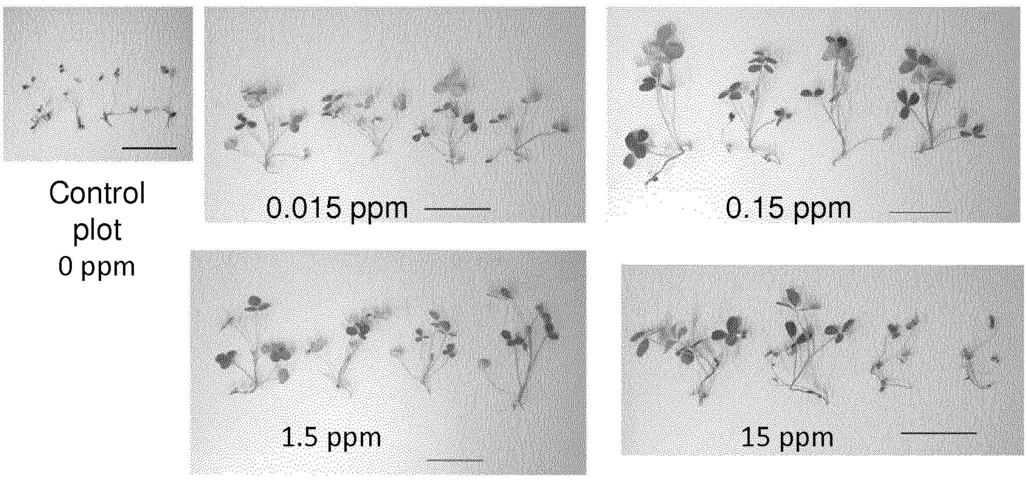

[Fig. 10]

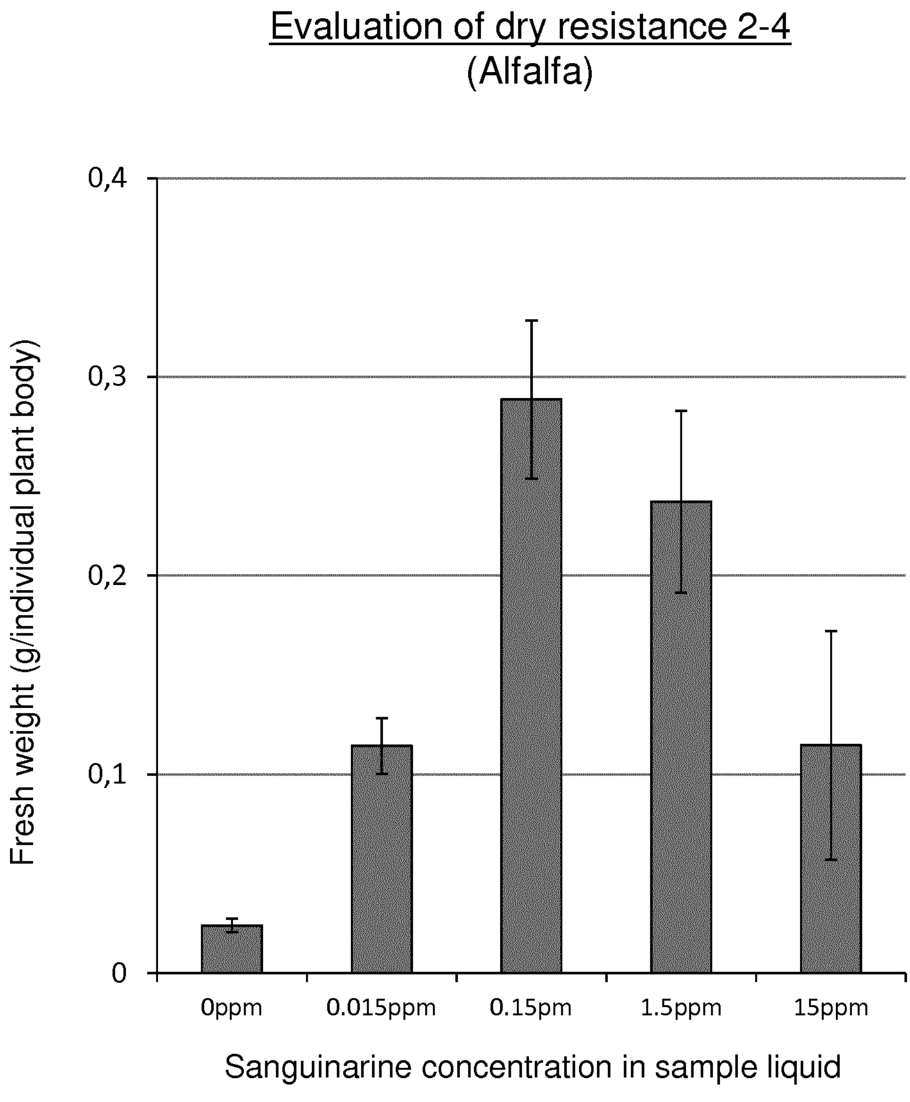
Evaluation of dry resistance 2-4
(Alfalfa)
Fresh weight (g/individual plant body)
0,4
0,3
0,2
0,1
0
0ppm
0.015ppm
0.15pm
1.5ppm
15ppm
Sanguinarine concentration in sample liquid

[Fig. 11]

## Evaluation of dry resistance 3-1
(Qing-geng-cai)

(a)

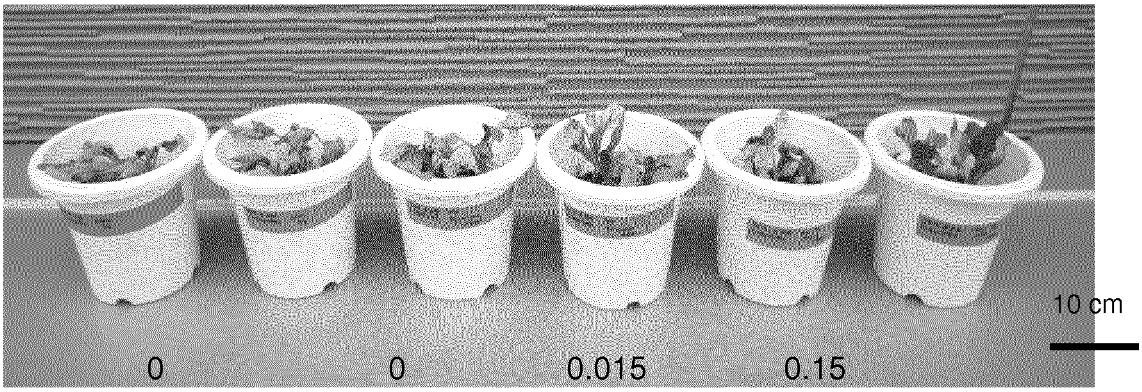


1.5 15
Sanguinarine concentration in sample liquid (ppm)

(b)

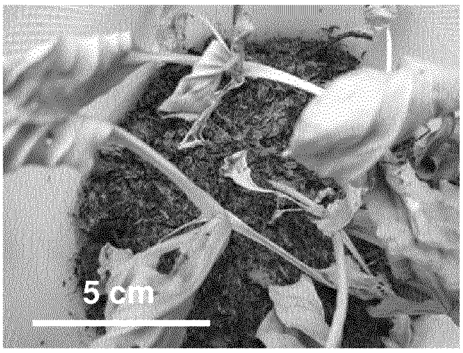


Control plot 0 ppm

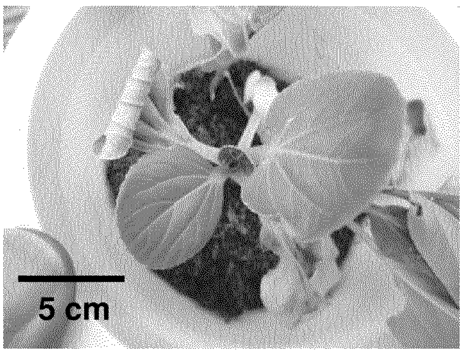


Test plot 0.15 ppm

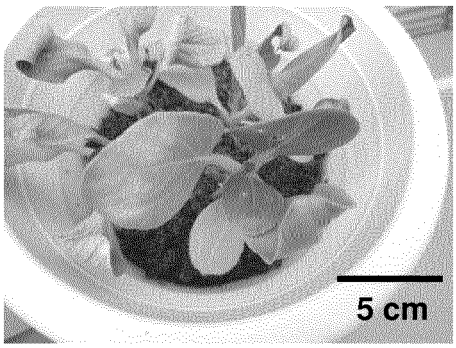


Test plot 15 ppm

ppm: Sanguinarine concentration in sample liquid

[Fig. 12]

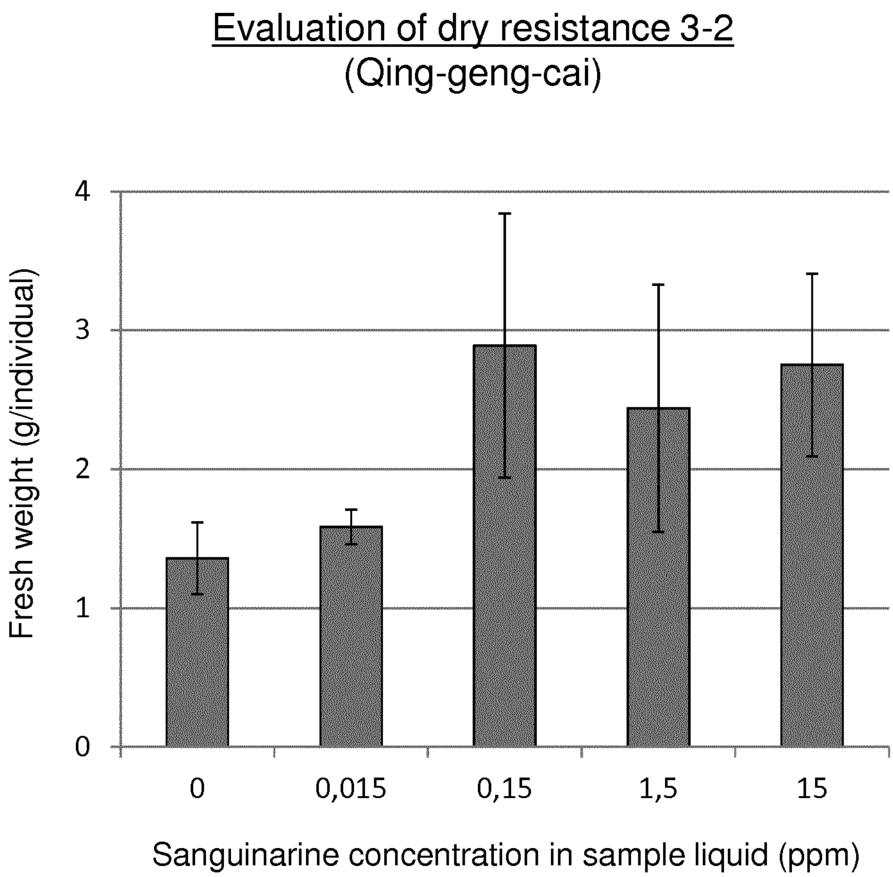
Evaluation of dry resistance 3-2
(Qing-geng-cai)
Fresh weight (g/individual)
4
3
2
1
0
0
0,015
0,15
1,5
15
Sanguinarine concentration in sample liquid (ppm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11199419 A
- JP 2007045709 A
- US 5133981 A
- JP 2008524130 PCT
- JP 2011521982 PCT
- JP 2011512370 PCT
- JP 5124944 A
- JP 2008037775 A
- JP 2009046411 A
- WO 2004066730 A1
- WO 2006059782 A1
- JP 2011521982 A
- CN 101352180 A

### Non-patent literature cited in the description

- **PSOTOVA et al.** Safety assessment of sanguiritrin, alkaloid fraction of Macleaya cordata, in rats. *Veterinarni Medicina,* 2006, vol. 51 (4), 145-155